# EUROPÄISCHE PATENTSCHRIFT

(11) **EP 2 714 440 B1**
(45) Veröffentlichungstag und Bekanntmachung des Hinweises auf die Patenterteilung: **02.05.2018**
(21) Anmeldenummer: 12728962.7
(22) Anmeldetag: 23.05.2012
(51) Int. Cl.: B60H 1/00, F25B 45/00

(54) **SERVICEGERÄT FÜR FAHRZEUGKLIMAANLAGEN UND VERFAHREN ZU SEINEM BETREIBEN**
SERVICING DEVICE FOR VEHICLE AIR-CONDITIONING SYSTEMS AND METHOD FOR OPERATING SAID DEVICE
APPAREIL D'ENTRETIEN POUR SYSTÈMES DE CLIMATISATION DE VÉHICULE ET SON PROCÉDÉ DE FONCTIONNEMENT

(30) Priorität: 23.05.2011 DE 202011101256 U
(43) Veröffentlichungstag der Anmeldung: 09.04.2014
(73) Patentinhaber: Dometic Sweden AB, 171 54 Solna (SE)
(72) Erfinder: ESCH, Franz-Josef, 48477 Hörstel (DE)
(74) Vertreter: Grosse Schumacher Knauer von Hirschhausen
(86) Internationale Anmeldenummer: PCT/EP2012/002197
(87) Internationale Veröffentlichungsnummer: WO 2012/159749

(56) Entgegenhaltungen:
- WO-A1-2007/085480
- US-A- 5 024 061
- US-A- 5 371 019
- US-B1- 6 408 637

## Beschreibung

### GEBIET DER ERFINDUNG

Die Erfindung betrifft ein Servicegerät für Fahrzeugklimaanlagen mit vorgeschalteter Kältemittel-Gasanalyse mit den Merkmalen des Oberbegriffs des Anspruchs 1 sowie ein Verfahren zum Betreiben desselben. Demnach umfasst ein Service-Gerät für Fahrzeugklimaanlagen zumindest eine Entleereinrichtung zum Absaugen des Kältemittel-/Kompressoröl-Gemisches aus dem Kältemittel-Kreislaufsystem einer Fahrzeugklimaanlage und einen Kältemittel-Gasanalysator. Bevorzugt können auch - wie an sich bekannt - mindestens ein Kompressoröl-Separator, ein Kältemittelverdichter, eine Trennstufe, eine Kältemittelwiegeeinrichtung, eine Vakuumpumpe zum Restentleeren des Kältemittel-Kreislaufsystems der Fahrzeugklimaanlage und/oder mindestens ein druck- und/oder zeitgesteuerten Umschalt-Ventilblock zum wahlweisen direkten fluidischen Durchverbinden des Kältemittel-Kreislaufsystems der Fahrzeugklimaanlage mit der Trennstufe oder mit einem Wiederauffüllsystem zum Wiederbefüllen der Fahrzeugklimaanlage mit Kältemittel, Kompressoröl und ggf. Additiv vorgesehen sein.

### TECHNOLOGISCHER HINTERGRUND

Service-Geräte für Fahrzeugklimaanlagen dienen unter anderem dazu, im Rahmen einer Wartung den Kältemittelkreislauf unterschiedlichster Fahrzeugklimaanlagen von Zeit zu Zeit zu entleeren und eine neue Kältemittelfüllung einzubringen. Dabei ist es erforderlich genaue Mengen und Kältemittelspezifikationen einzuhalten. Außerdem muss in vielen Fällen Schmieröl für den Kompressor des Kältemittelkreislaufs der Fahrzeugklimaanlage entfernt und in der Regel wieder nachgefüllt werden. Auch dies erfolgt in vom Fahrzeugtyp bzw. Klimagerätetyp abhängigen Mengen und Spezifikationen. Manche Fahrzeugklimaanlagen benötigen außerdem ein Additiv für den Kältemittelkreislauf, welches bei einem Wartungsservice ebenfalls zumindest teilweise ausgetauscht wird. Üblicherweise gelangt das Kompressorenöl in den Kältemittelkreislauf und wird beim Betrieb der Fahrzeugklimaanlagen daher mit umgepumpt. Nur ganz bestimmte Paarungen von Kältemittel und Kompressorenöl sind für diesen Zweck miteinander verträglich. Um nach dem Absaugen des Kältemittel/Kompressorenöl-Gemisches zumindest einen Teil, vorzugsweise den überwiegenden Teil, des Kältemittels zur Wiederverwendung zurückgewinnen zu können, weisen Service-Geräte für Fahrzeugklimaanlagen üblicherweise auch einen Separator auf, mit welchem Kältemittel aus dem Kältemittel/Kompressorenölgemisch zur Wiederverwendung abgetrennt werden kann (Kompresseröl-Separator). Gebrauchtes Kompressorenöl sowie, gegebenenfalls, gebrauchtes Additiv wird/werden in der Regel durch das Service-Gerät aufgefangen, um später verworfen oder wiederverwendet zu werden.

Aus der WO 2007/085480 der Anmelderin ist ein Service-Gerät für Fahrzeugklimaanlagen gemäß dem Blockschaltbild nach Bild 1 bekannt. Diese zeigt in durchgezogener Linie die wesentlichen Bestandteile eines gebräuchlichen Service-Gerätes für eine Fahrzeugklimaanlage und in gestrichelten Linien eine zu wartende Fahrzeugklimaanlage. Letztere besteht aus einem ölgeschmierten Kompressor 1', einem Verflüssiger 2', einen Verdampfer 3', sowie zwischen diesen Komponenten, ein geschlossenes Kühlmittelsystem herstellende Rohrleitungen 4A'-4C'. Ferner ist ein Trockner 5' vorgesehen, der auch als Sammler oder Reservoir für Kältemittel dienen kann. Schließlich sind für den Fluidaustausch zwei Serviceanschlüsse 6A'/6B' in den Kältemittelkreislauf eingebaut. Die am Verdampfer 3' zur Verfügung stehende Kälte wird durch ein Kaltluftgebläse 7' ab- und dem Fahrzeuginnenraum zugeführt. Die Kondensationswärme des Verflüssigers 2' wird durch ein Warmluftgebläse 8' abtransportiert. Service-Anschluss-Verbinder 9A' und 9B' gestatten es, im Wartungsfalle Kältemittel/Kompressoröl-Gemisch an den Serviceanschlüssen 6A', 6B' abzuziehen bzw. aufzufüllen. Die insgesamt mit 10' bezifferte Fahrzeugklimaanlage unterscheidet sich von Fahrzeugtyp zu Fahrzeugtyp und ist nicht Gegenstand der vorliegenden Erfindung.

Das insgesamt mit 20' bezeichnete Servicegerät für eine Fahrzeugklimaanlage weißt flexible Druckschläuche 11A', 11B' zum Verbinden des Servicegerätes 20' mit der Fahrzeugklimaanlage 10' über die Service-Anschlussverbinder 9A', 9B' an den Serviceanschlüssen 6A', 6B' auf. Eine als Kältemittelkompressor ausgebildete Absaugpumpe 12' fördert gebrauchtes Kältemittel/Kompressoröl-Gemisch über die Druckschläuche 11A' rund 11B' und den Separator 14'. Dieser trennt durch Verdampfen Kältemittel aus dem abgesaugten Gemisch ab und führt dies einem als Druckbehälter ausgebildeten Kältemittelvorrat 15' zu. Im Separator 14' abgeschiedenes Kompressoröl/Additiv-Gemisch wird in einem austauschbaren Altölbehälter 16' aufgefangen und mittels einer Wiegeeinrichtung 17A' gewichtsmäßig erfasst. Mit dem Kältemittelvorrat 15' ist ein luftgekühlter Kältemittelverflüssiger 15A' fest verbunden. Damit wird rückgeführtes Kältemittel überwiegend in flüssiger Form dem Kältemittelvorrat 15' zugeführt. Der gesamte Kältemittelvorrat samt Verflüssiger ruht auf einer weiteren Wiegeeinrichtung 17B' zum Erfassen des zu- und abgeführten sowie des vorrätigen Kältemittels. Eine Vakuumpumpe 13' sorgt nach dem Absaugen des gebrauchten Gemisches für den für das Wiederbefüllen erforderlichen Unterdruck im Kreislauf der Fahrzeugklimaanlage und gibt das abgesaugte Gasvolumen an die Atmosphäre ab.

Ein insgesamt mit 19' bezeichnetes Wiederauffüllsystem besteht im wesentlichen aus austauschbaren Vorratsbehältern 19D' für Kompressoröl und 19C' für Additive, einer Steuereinheit 19A' mit Ventilblock und Steuerleitungen 19B', einer Fernanzeige 19E' sowie Dosier- und Ventileinheiten 19F" bis 19F"". Die Vorratsbehälter 19C' und 19D' sind bevorzugt wägbar. Hierzu dienen weitere Wiegeeinrichtungen 17C', 17D'.

Aus der DE 20 2008 003 123 U1 ist ein weiteres Service-Gerät für Fahrzeugklimaanlagen der Anmelderin bekannt, bei dem die Wiederbefüllbarkeit der zuvor evakuierten Fahrzeug-Klimaanlage durch eine im Kältemittel-Vorratsbehälter vorgesehene Wärmequelle zur Druckerhöhung des Kältemittels verbessert wird. Ein vergleichbares Service-Gerät für Fahrzeugklimaanlagen ist aus der US 2009/0158756A1 bekannt.

Bei einem weiteren gattungsgemäßen Servicegerät für Fahrzeugklimaanlagen der Anmelderin ist es aus der noch unveröffentlichten DE 10 2009 054 446, angemeldet am 25. November 2009, bekannt, in einer ersten Wartungsphase ein Kreislaufgemisch aus Kältemittel, Kompressorenöl sowie gegebenenfalls weiteren Gemischbestandteilen aus einer Fahrzeugklimaanlage in eine Trennstufe mittels eines Kältemittelverdichters über einen Separator abzusaugen und dabei Kältemittel mittels des Separators von dem abgesaugten Kreislaufgemisch zu trennen, zu komprimieren und aufzufangen sowie seine Menge zu bestimmen. In einer zweiten Wartungsphase wird das Kältemittel-Kreislaufsystem der Fahrzeugklimaanlage mittels einer Vakuumpumpe weitgehend restentleert. In der zweiten Wartungsphase abgepumpte Restgase werden mittels des Kältemittelverdichters durch die Trennstufe geleitet und die Menge des dabei aufgefangenen Kältemittelrestes wird bestimmt. Durch diese Maßnahme wird u. a. die Diagnose über den Zustand der Fahrzeugklimaanlage verbessert.

Um zu vermeiden, dass aus einer zu wartenden Fahrzeugklimaanlage ein, z. B. fälschlich dort verwendetes, Kältemittel in die Fahrzeugklimaanlage gelangt, das mit dem/den in dem Service-Gerät abgesaugten und gespeicherten Kältemittel/n nicht verträglich ist, werden seit jüngerer Zeit Gasanalyse-Geräte für abzusaugendes Kältemittel eingesetzt. Einer der Nachteile besteht darin, dass die Analysegenauigkeit in der Regel schwankt und das Analyse-Gerät deshalb häufig überprüft werden müssen.

Ein Servicegerät für Fahrzeugklimaanlagen mit einem Kältemittel-Gasanalysator ist ferner aus der US 5,024,061 A bekannt. Bei diesem Servicegerät wird der Kältemittel-Kreislaufsystem einer Fahrzeugklimaanlage gespült.

### DARSTELLUNG DER ERFINDUNG

Davon ausgehend liegt der Erfindung die Aufgabe zugrunde, bei einem Servicegerät für Fahrzeugklimaanlagen mit vorgeschalteter Kältemittel-Gasanalyse die Stabilität der AnalyseGenauigkeit zu verbessern.

Zur Lösung des der Erfindung zugrunde liegenden Problems wird ein gattungsgemäßes Servicegerät für Fahrzeugklimaanlagen mit den Merkmalen des Anspruchs 1 und ein Verfahren mit den Merkmalen des Anspruchs 4 vorgeschlagen. Demnach ist an oder in zumindest einer der Verbindungsleitungen zwischen dem Service-Gerät und der Fahrzeugklimaanlage ein Gasanalyseanschluss vorgesehen. Dieser ist über einen evakuierbaren und mit einer Evakuiereinrichtung zumindest zeitweise verbundenen Ölseparator mit dem Gasanalysator für Kältemittel fluidisch verbunden

Die Erfindung geht von der Erkenntnis aus, dass die Anwesenheit von Kompressoröl im auszutauschenden Kältemittel eine wesentliche Ursache von Disfunktionen des Analyse-Gerätes darstellt.

Wenn der Ölseparator mit einer Trennstufe für Kältemittel/Kompressoröl-Gemisch verbindbar ist, kann die zum Zwecke der Kältemittelgasanalyse aus der Fahrzeugklimaanlage gezogene Probe aus Kältemittel/Kompressoröl-Gemisch in gleicher Weise wie das beim Entleeren der Fahrzeugklimaanlage anfallende Kältemittel/Kompressoröl-Gemisch weiterbehandelt und insbesondere Kältemittel wiedergewonnen werden.

Wenn der Bereich der Verbindungsleitungen zwischen dem Ölseparator und Service-Anschlussverbindern des Servicegerätes über Verbinder von Kältemittel/Kompressoröl-Gemisch entleerbar ist, kann dadurch das Servicegerät in einfacher Weise vor nicht akzeptierten Kältemitteln und/oder Kompressorölen geschützt werden.

Durch die Erfindung kann in einem integrierten Prozess bei äußerst vertretbarem Aufwand der ganz überwiegende Teil des für die Probenahme zur Gasanalyse vorliegenden Kältmittel/Kompressoröl-Gemisches von Kompressorölanteilen getrennt werden. Disfunktionen des Gasanalysators und/oder schwankende Analysewerte werden dadurch weitestgehend ausgeschlossen, ohne dass hierzu aufwendige Wartungsarbeiten durchgeführt werden müssen. Eine erfindungsgemäße Gasanalyse ist bei Bedarf in ein bestehendes Service-Gerät für Fahrzeugklimaanlagen, insbesondere als Modul, nachrüstbar. Eine dafür bereits vorgesehene Vorrüstung, z. B. in Gestalt von geeigneten Anschlusspunkten ist hilfreich.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Servicegeräts für Fahrzeugklimaanlagen dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen:
- Fig. 2: ein Servicegerät für Fahrzeugklimaanlagen als Blockschaltbild in einer Grundstellung;
- Fig.3: dasselbe Servicegerät in der Evakuierphase eines Ölseparators (156);
- Fig.4: dasselbe Servicegerät in der Befüllungsphase des Ölseparators (156);
- Fig.5: dasselbe Servicegerät in der Probenahmesphase des Analysators (161);
- Fig.6: dasselbe Servicegerät in der Analysesphase des Analysators (161);
- Fig.7: dasselbe Servicegerät in der Entleerungsphase des Ölseparators (156) nach Genehmigung des analysierten Kältemittels sowie
- Fig.8: dasselbe Servicegerät in der Entleerungsphase des Ölseparators (156) nach Ablehnung des analysierten Kältemittels.

### DETAILLIERTE BESCHREIBUNG VON AUSFÜHRUNGSBEISPIELEN

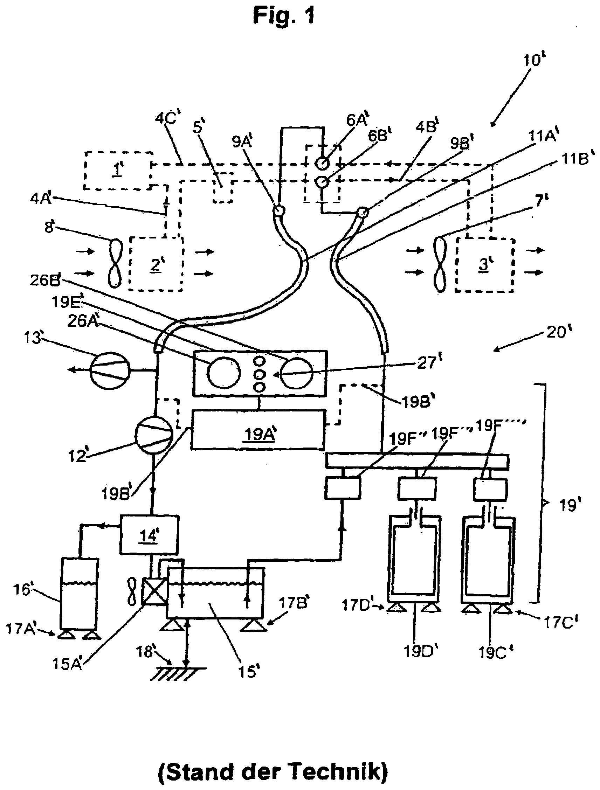

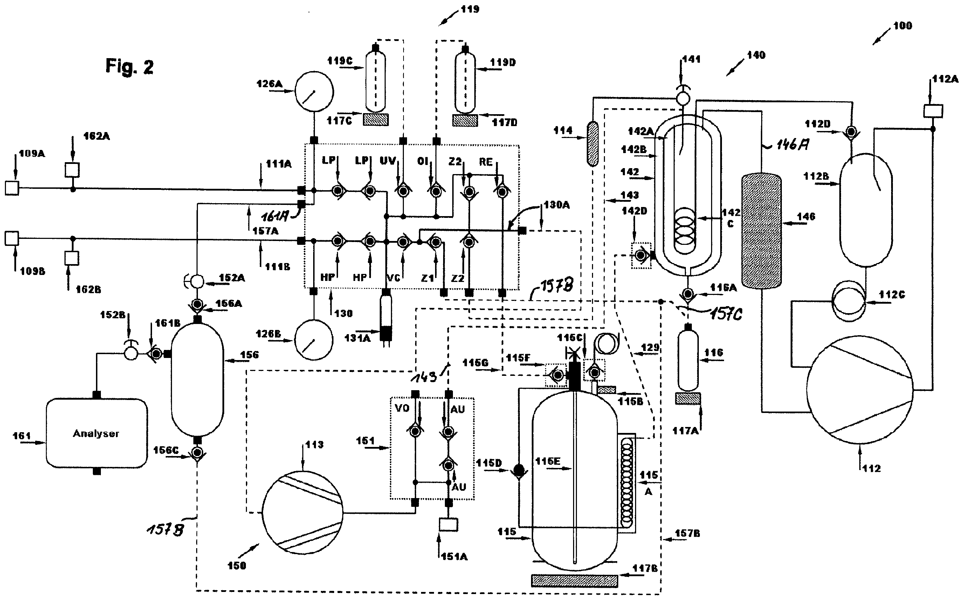

Aus dem Blockschaltbild nach Fig. 2 ergibt sich der Grundaufbau eines gattungsgemäßen Servicegerätes für Fahrzeugklimaanlagen, wobei allerdings nicht alle der dargestellten Komponenten zwingender Bestandteil der vorliegenden Erfindung sind. Demnach sind Service-Anschlussverbinder 109A, 109B zum Anschluss an den Kühlmittel-/Kompressorölkreislauf einer Fahrzeugklimaanlage (hier nicht dargestellt) vorgesehen, um diese zu warten, insbesondere zu entleeren und wiederzubefüllen. Über Druckschläuche 111A, 111B besteht eine fluidische Verbindung zu einem ersten Umschalt-Ventilblock 130, dessen Funktion weiter unten erklärt wird. Der Umschalt-Ventilblock 130 ist zum Einen mit einer rechts im Bild dargestellten Trennstufe 140, die weiter unten erklärt wird, und zum Anderen (links unten im Bild) mit einer Vakuumeinheit 150, die ebenfalls weiter unten erklärt werden wird, fluidisch verbunden. Ein Niederdruckmanometer 126A und ein Hochdruckmanometer 126B, angeschlossen am Umschalt-Ventilblock 130, dienen unter anderem der Zustands- und Funktionskontrolle des Kühlmittel-Kompressorölkreislaufes der Fahrzeugklimaanlage. Des Weiteren ist der Umschalt-Ventilblock 130 an ein Wiederauffüllsystem 119 für Kompressoröl und Additive fluidisch angeschlossen, mit Wiegeeinrichtungen 117C und 117D für Spender 119C, 119D, zum Beispiel für ein Lecksuchadditiv respektive für Frischöl. Der Systemdruck innerhalb des Umschalt-Ventilblocks 130, der nach beginnender Entleerung des Fluidkreislaufes für die Systemsteuerung, die weiter unten erklärt wird, von Bedeutung ist, wird über einen mit einer Sammelleitung 130A des Umschalt-Ventilblocks 130 verbundenen Drucksensor 131A überwacht, so dass der Anlagendruck, insbesondere der Kältemitteldruck der Fahrzeugklimaanlage überwacht wird, wodurch unter anderem die nachfolgend erläuterten Kreislaufsysteme (Trennstufe 140 und Vakuumeinheit 150 bzw. zugehörige Ventilschaltungen) gesteuert werden können.

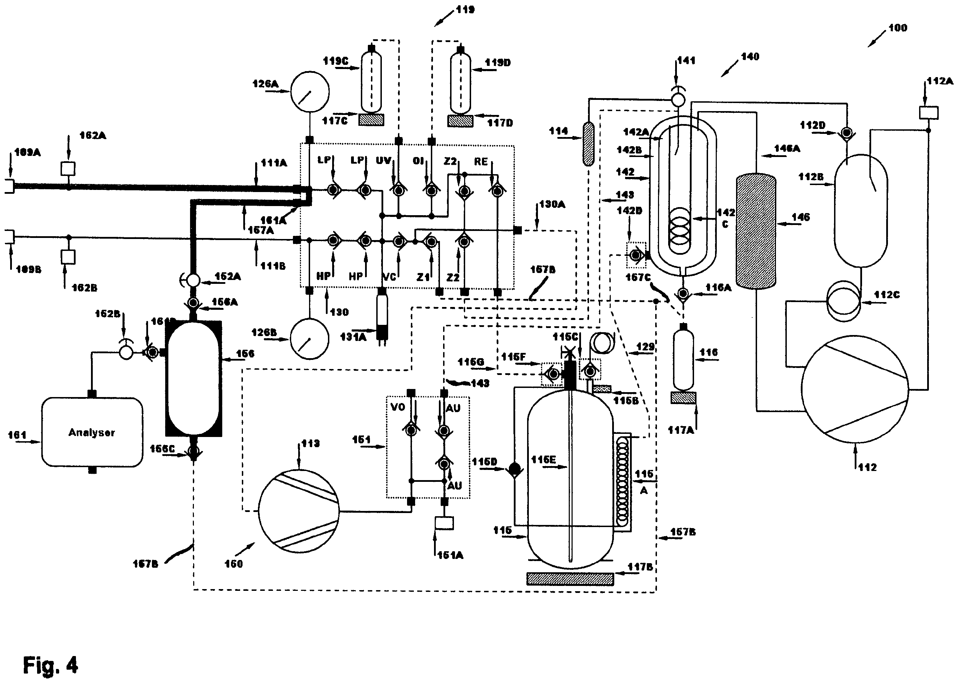

Die Funktionsweise der Trennstufe 140 ist die Folgende: Nach Anschließen der Service-Anschlussverbinder 109A, 109B an die entsprechenden Ports der Fahrzeugklimaanlage und Freigabe der entsprechenden Ventile LP, HP, Z2 des Umschalt-Ventilblocks 130, steht der Systemdruck der Fahrzeugklimaanlage zur Verfügung, um einen ersten Teil des Inhalts des Kältemittelkompressorölkreislaufes der Fahrzeugklimaanlage in die Trennstufe 140 zu überführen. Dieser Systemdruck beträgt bei 0°C bereits etwa 3 bar absolut und liegt bei etwa 20°C bereits in einer Größenordnung von 6 bar absolut, so dass, wie z.B. in der Befüllungsphase nach Fig. 4, die Förderung von Kältemittel Kompressoröl-Gemisch erfolgt. Ebenso kann die anfängliche Entleerung der nicht dargestellten Fahrzeugklimaanlagen zur Trennstufe 140 hin zunächst selbsttätig erfolgen. Im Übrigen wird diese Förderung durch Betreiben eines Verdichters 112, wie weiter unten erläutert, unterstützt und später bei abfallendem Systemdruck weiter in Gang gehalten. Von dem Umschalt-Ventilblock 130 gelangt das Kältemittel Kompressoröl-Gemisch über einen Grobfilter 114 und ein auf etwa 3,5 bar absolut eingestelltes Konstantdruckventil 141 in einen Doppelmantelwärmeaustauscher 142, und zwar in dessen Innenbehälter 142A. Dort werden die flüchtigen Komponenten verdampft und die Gasphase gelangt über eine Leitung 146A in einen Gastrockner 146 und von dort in den Verdichter 112.

Der Doppelmantelwärmeaustauscher 142 dient gleichzeitig als Separator für flüssige Bestandteile des Kältemittel Kompressoröl-Gemisches, hier handelt es sich im Kern um das Kompressoröl, gegebenenfalls enthaltene Additive sowie im Kompressoröl noch gebundene Restmengen des Kältemittels. Diese Flüssigphase wird über ein Ölablassventil 116A einem Altölbehälter 116 zugeführt. Die anfallenden Mengen können über eine Wiegeeinrichtung 117A, welche den Behälter mitwiegt, registriert werden.

Der Verdichter 112 sorgt dafür, dass an seiner Ausgangsseite das Kältemittel auf einen Druck von bis zu z.B. 19 bar absolut komprimiert wird. Ein Kompressornotausventil 112A begrenzt den Druck in der Regel auf 19 bar. Da das Schmieröl des Verdichters 112 auch in das komprimierte Kältemittel gelangt, wird dieses in einem (ersten) Ölseparator 112B abgetrennt und über ein Kapillarrohr 112C, das wie eine Druckdrossel wirkt, der Schmierung des Verdichters 112 wieder zugeführt. Über ein Magnetventil 112D gelangt das komprimierte, getrocknete und von Kompressoröl sowie Additiven befreite Kältemittel in eine Heizwendel 142C, die sich im Gasraum des Innenbehälters 142A des Doppelmantelwärmeaustauschers 142 befindet. Hierdurch kann die im komprimierten Kältemittel enthaltene Kompressionswärme abgegeben werden, um auf der Kaltseite das aus der Fahrzeugklimaanlage frisch ankommende Kältemittel/Kompressoröl-Gemisch so weit wie möglich zu verdampfen. Aus der Heizwendel 142C gelangt das gereinigte (recycelte) Kältemittel zunächst in den Außenmantelbereich (Außenbehälter 142B) des Doppelmantelwärmeaustauschers 142 und von dort über einen Ventilblock 142D und einen Verbindungsschlauch 129 zum Kältemittelvorrat 115 (Vorratsbehälter).

Der Vorratsbehälter wird samt Inhalt von einer Wiegeeinrichtung 117B gewogen. Der Vorratsbehälter trägt auch einen Kältemittelverflüssiger 115A, der vorteilhafter Weise mit gewogen wird und in dem das unter Kompressionsdruck stehende Kältemittel kondensiert wird, um in flüssiger Form in den Kältemittelvorrat 115 zu gelangen. Sowohl der (erste) Separator 112B als auch der Kältemittelvorrat 115 sind als so genannte Druckbehälter ausgelegt. Der Druck im Kältemittelvorrat 115 wird über ein Ventil 115B gegen Überdruck gesichert, denn die sich oberhalb des Flüssigkeitsspiegels ausbildende Gasphase nicht kondensierbarer Gase muss aus Sicherheitsgründen ab einem bestimmten Überdruck von z.B. 16 bar geregelt abgelassen werden. Dies kann auch nicht automatisch über eine Handhabe 115C durch eine Bedienperson erfolgen.

Das flüssige Kältemittel gelangt über ein Rückschlagventil 115D und ein Steigrohr 115E in den Flüssigbereich des Kältemittelvorrats 115. Um die Fahrzeugklimaanlage mit Kältemittel wiederbefüllen zu können, gelangt flüssiges Kältemittel über das Steigrohr 115E, ein Ventil 115F und eine Verbindungsleitung 115G zurück in den Umschalt-Ventilblock 130, vorzugsweise in dessen Sammelleitung.

Sobald die Fahrzeugklimaanlage soweit entleert ist, dass der Verdichter 112 auf seiner Niederdruckseite nicht mehr genügend Kältemittel-/Kompressorölgemisch ansaugen kann, was z.B. bei einem Druck 0,7 bar absolut der Fall sein kann, wird die Vakuumeinheit 150, ggf. durch Betätigen der entsprechenden Ventile, in Gang gesetzt. So werden weitere Gasbestandteile aus dem Fluidkreislauf der Fahrzeugklimaanlage über die Sammelleitung des Umschalt-Ventilblocks 130 durch die Vakuumpumpe 113 angesaugt. Von der Ausgangsseite der Vakuumpumpe 113 gelangt dieses Gas oder Gasgemisch über einen (zweiten) Umschalt-Ventilblock 151 und Magnetventile AU in die Verbindungsleitung 143, die den Umschalt-Ventilblock 130 an die Trennstufe 140 fluidisch ankoppelt. Die von der Vakuumpumpe 113 geförderten Gasmengen aus der Fahrzeugklimaanlage werden nun in der Trennstufe 140 einschließlich Wägung genauso behandelt, wie die bei Beginn des Entleerungsprozesses aus der Fahrzeugklimaanlage selbstständig austretenden Mengen an Kältemittel-/Kompressoröl-Gemisch. Der Unterschied zu der ersten Phase, hier als Abströmphase bezeichnet, besteht darin, dass aus der Fahrzeugklimaanlage aufgrund der vorangehenden durch den Verdichter 112 unterstützten Abströmphase keine flüssigen Bestandteile, also im wesentlichen nur noch gasförmiges Kältemittel oder ggf. Luft aus der Fahrzeugklimaanlage angesaugt werden. Dabei sind zunächst relativ große Gasmengen zu bewältigen. Gegen Ende der zweiten Phase, hier als Evakuierphase bezeichnet, werden die Gasmengen aber deutlich geringer. Bei einem Eingangsdruck von etwa 1mbar oder nach Ablauf einer fest voreingestellten Prozesszeit wird der Evakuierprozess beendet.

Der von der Vakuumpumpe 113 erzeugte Gasdruck auf ihrer Ausgangsseite sollte eine Größenordnung von 2 bar absolut nicht überschreiten, um die Vakuumpumpe 113 nicht zu schädigen. Zur Druckkontrolle ist dem der Vakuumpumpe nachgeschaltete Umschalt-Ventilblock 151 ein Druckschalter 151A zugeordnet, mit dessen Hilfe, die Vakuumpumpe 113 bei Überschreiten eines Ausgangsdruckes von z.B. 2 bar abschaltet, bis der Ausgangsdruck wieder entsprechend abgesunken ist, so dass die Vakuumpumpe 113 wieder zugeschaltet werden kann.

Da das Service-Gerät nicht nur für das Absaugen und Wiederbefüllen der Fahrzeugklimaanlage im normalen Wartungsbetrieb genutzt werden kann, sondern auch für Reparaturfälle an Klimaanlagen, z.B. Komponentenaustausch, ist der der Vakuumpumpe 113 nachgeschaltete Umschalt-Ventilblock 151 mit einem Ablassventil VO ausgestattet, das z.B. in die Atmosphäre führen kann. Wenn also aus der reparierten Fahrzeugklimaanlage für nachfolgendes Wiederbefüllen lediglich Luft abgesaugt wird, muss diese nicht zwingender Maßen in die Trennstufe 140 gelangen.

Ein evakuierbarer (zweiter) Ölseparator 156 ist an oder nahe seinem oberen Ende über eine absperrbare Verbindungsleitung 157A und z. B. ein von Hand betriebenes oder automatisch betätigbares Absperrventil 156A und - wie nicht dargestellt - ggf. 156B, in einer ersten (dargestellten) Ausführungsform, nahe oder im Ausführungsbeispiel an der Eingangsseite des ersten Umschalt-Ventilblocks 130 mit der Niederdruckseite fluidisch verbunden.

Der Ölseparator 156 ist an oder nahe seinem unteren Ende über zumindest ein weiteres Absperrventil 156C und - wie nicht dargestellt - ggf. 156D und eine Verbindungsleitung 157B sowie weiter über den ersten Umschalt-Ventilblock 130 und dessen Sammelleitung 130A mit der Saugseite der Vakuumpumpe 113 fluidisch verbindbar. Somit kann eine direkte Strömungsverbindung zwischen dem evakuierbaren Ölseparator 156 und der Vakuumpumpe 113 hergestellt werden. Die Verbindungsleitung 157B hat vorzugsweise eine Strömungsverbindung auch zum Altölbehälter 116, insbesondere an einem nach unten geneigt Leitungsbereich 157C, so dass in dem zweiten Ölseparator 156 angefallenes Kompressoröl auch direkt von dem Altölbehälter 116 aufgenommen werden kann.

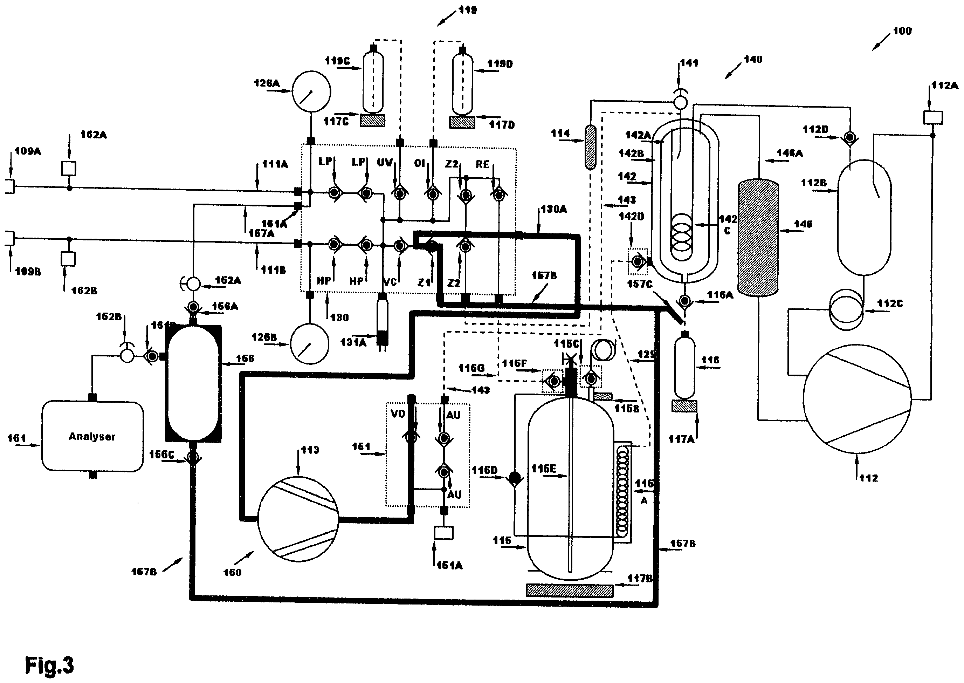

Die Funktionsweise ist Folgende: Zu Beginn eines Kältemittelaustausches werden die Service-Anschlussverbinder 109A, 109B an die entsprechenden Kopplungsstellen des Kältemittelkreislaufes einer Fahrzeugklimaanlage fluidisch angekoppelt. So dann wird, wie aus Figur 3 in fetten Linien ersichtlich, eine Evakuierroutine für den (zweiten) Ölseparator 156 durchgeführt. Hierzu werden die Absperrventile 156A und 161B, ggf. selbsttätig, geschlossen und das Absperrventil 156C offen gehalten bzw., vorzugsweise elektrische, geöffnet. Absperrventile 156A und ggf. 156B (nicht dargestellt) stromauf des Ölseparators 156 und/oder Absperrventile 156C und ggf. 156D stromab des Ölseparators 156 können (grundsätzlich) durch ein einziges (156A bzw. 156C) ersetzt werden - wie dargestellt. Auf die vorbeschriebene Weise kann der Ölseparator 156 evakuiert und sein Innendruck auf z.B. 1mbar absolut abgesenkt werden. Ebenso werden die kurzen Leitungen stromauf des Ölseparators 156 bis hin zu dem/den genannten Absperrventil/en evakuiert, so dass keine die spätere Analyse verfälschende Gase, vor allem im Ölseparator 156 vorhanden sind. Etwaige Rückstände von Kompressoröl werden aus dem Ölseparator 156 in den Altölbehälter 116 überführt.

In dem nachfolgenden Arbeitsschritt, der Probenbereitstellung, wird, wie an den fett ausgezogenen Linien in Figur 4 verdeutlicht, der Ölseparator 156 zur Vakuumpumpe 113 hin durch Schließen der Absperrventils 156C abgeschottet und durch Öffnen des Absperrventils 156A über die Verbindungsleitung 157A mit dem Gasanalyseanschluss 161A und der Niederdruckleitung, wie z.B. dem Druckschlauch 111A, fluidisch verbunden. Somit wird auch der Ölseparator 156 mit dem Serviceanschlussverbinder 109A der Niederdruckseite und der stromauf angeschlossenen Fahrzeugklimaanlage fluidisch leitend verbunden. Durch den in der Fahrzeugklimaanlage zu Beginn in der Regel vorherrschenden Überdruck, jedenfalls aber auf Grund des Vakuums im Ölseparator 156, strömt nun Kältemittel/Kompressoröl-Gemisch in den Ölseparator 156 über, bis dessen Innendruck mit dem der Fahrzeugklimaanlage ausgeglichen ist, oder bis das Absperrventil 156A wieder geschlossen wird. Jedenfalls wird in der Regel abgewartet, bis im Ölseperator 156 ein gewisser Überdruck herrscht. Schon während des Überströmens von gebrauchtem Kältemittel/Kompressoröl-Gemisch in den Ölseparator 156 und auch nach Schließen seines stromauf befindlichen Absperrventils 156A setzt sich die Flüssigphase des Kältemittel/Kompressoröl-Gemisches im Sumpfbereich am unteren Ende des Ölseparators 156 ab, während sich in der oberhalb dieses Flüssigkeitsspiegels bildenden Gasphase verdampftes Kältemittel und ggf. Luft befinden. Der Abscheidegrad beträgt vorzugsweise 99% oder besser, sollte aber zumindest oberhalb von 90% liegen.

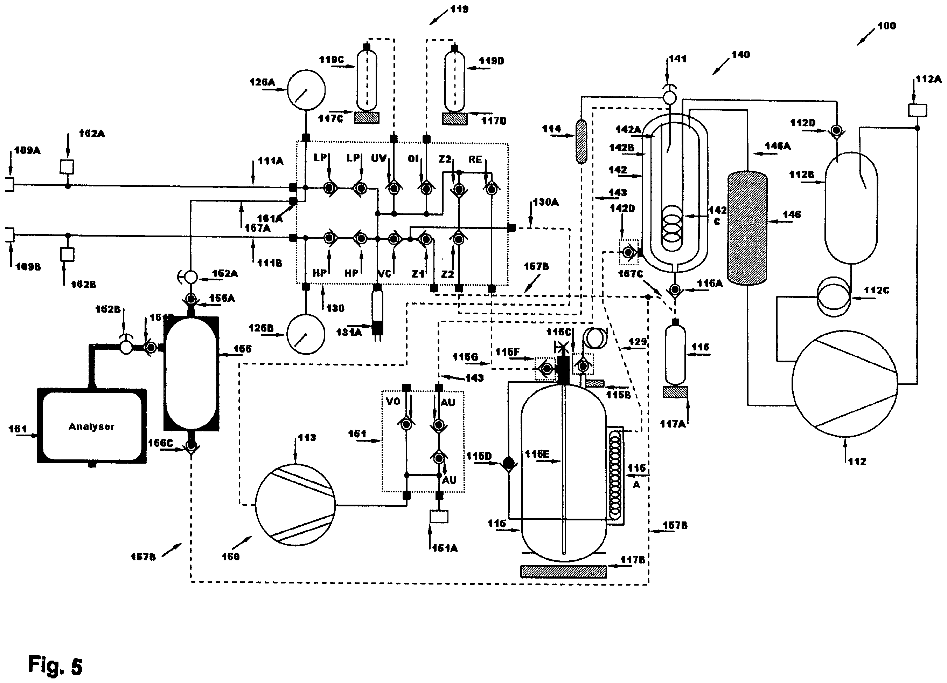

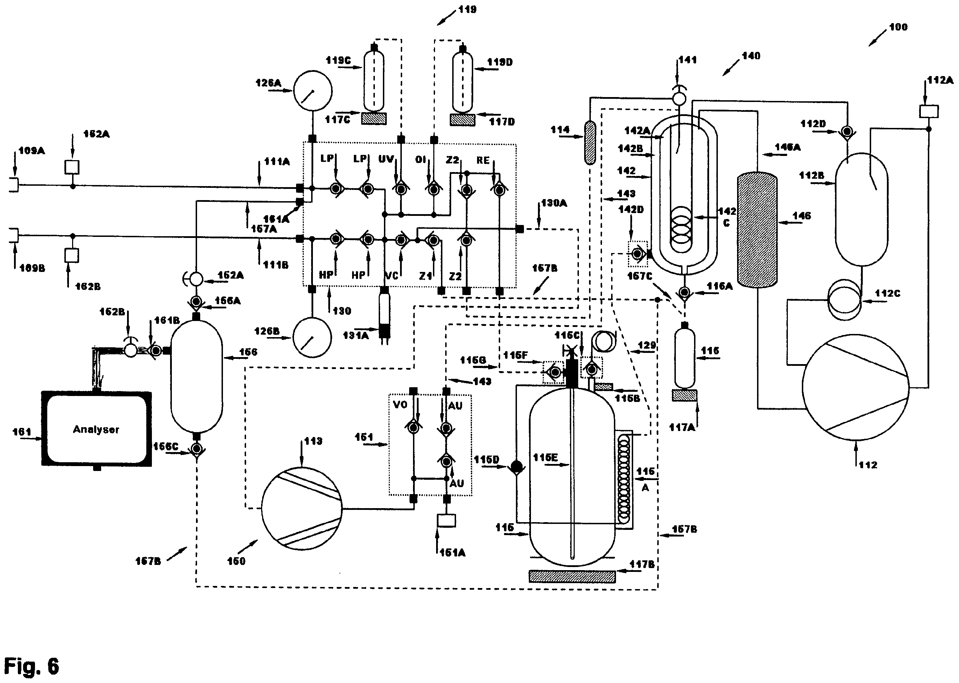

In der nächsten Arbeitsphase wird, wie die in Figur 5 durch fett ausgezogene Linien dargestellt, der Ölseparator 156 mit dem Gasanalysator 161 durch Öffnen des eingangsseitigen Absperrventils 161B fluidisch verbunden. Durch den in der Gasphase des Ölseparators in der Regel herrschenden Überdruck strömt nun Kältemittelgas und ggf. Luft aber kein Kompressoröl in den Gasanalysator 151 über. Der Gasanalysator 161 kann eine an sich bekannte (nicht dargestellte) eigene Pumpe aufweisen, um Probengas in den Gasanalysator einzusaugen. Schon während des Überströmens des Probengases, oder aber, wie bevorzugt, nach einem fluidischen Trennen des Ölseparators 156 vom Gasanalysator 161 durch Schließen des Absperrventils 161B, wird die Gasanalyse durchgeführt (Figur 6) und anschließend die geprüfte Kältemittelprobe aus dem Analysator abgelassen.

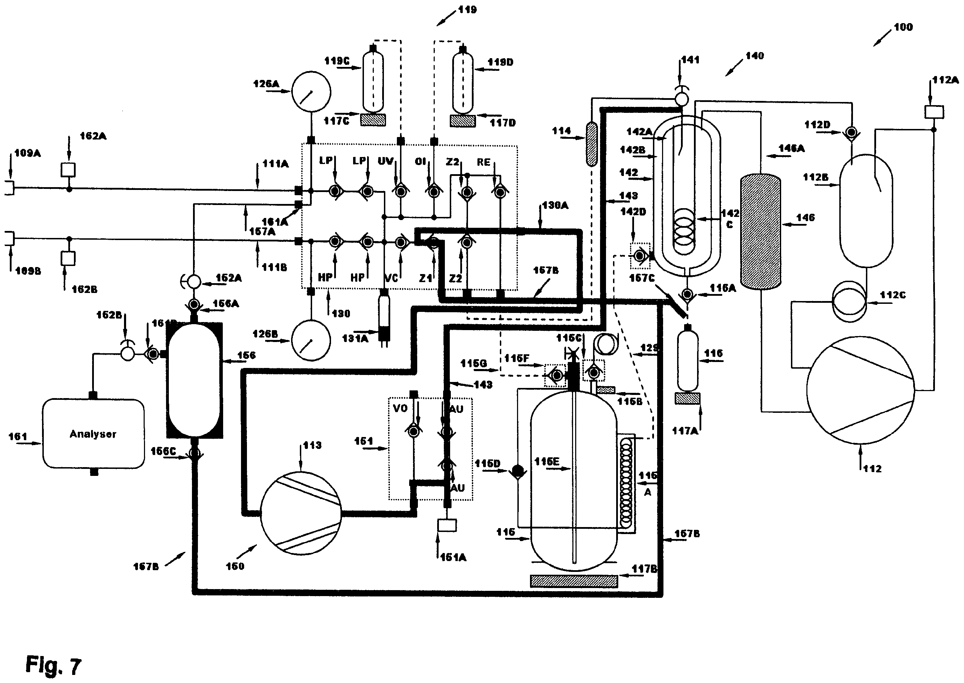

Wenn der Gasanalysator 161 das Kältemittelgas akzeptiert, können nunmehr, wie in Figur 7 mit fetten Linien dargestellt, das im Ölseparator 156 vorhandene Kältemittel und das Kompressoröl abgesaugt werden, indem das Absperrventil 156C wieder geöffnet wird. Bevorzugt wird das dabei abgesaugte Gemisch aber nicht in die Atmosphäre entlassen, sondern von der Vakuumpumpe 113 über den zweiten Ventilblock 151 und eine Verbindungsleitung 143 dem DoppelmantelWärmeaustauschers 142 zugeführt, um das Kompressoröl in den Altölbehälter 116 abzuscheiden und das Kältemittel in der gleichen Weise wiederzugewinnen, wie es im Schritt des Entleerens der Fahrzeugklimaanlage geschieht. Das Kompressoröl kann dabei, wie im Zusammenhang mit Figur 2 weiter oben bereits erwähnt, über die Verbindungsleitung 157B und eine Strömungsverbindung zum Altölbehälter 116, insbesondere an einem nach unten geneigt Leitungsbereich 157C, auch direkt von dem Altölbehälter 116 aufgenommen werden. Im Übrigen gelangt das Kältemittel/Kompressoröl-Gemisch über den ersten Ventilblock 130 in die Trennstufe 140 und wird dort behandelt, wie im Zusammenhang mit Figur 2 bereits näher erläutert.

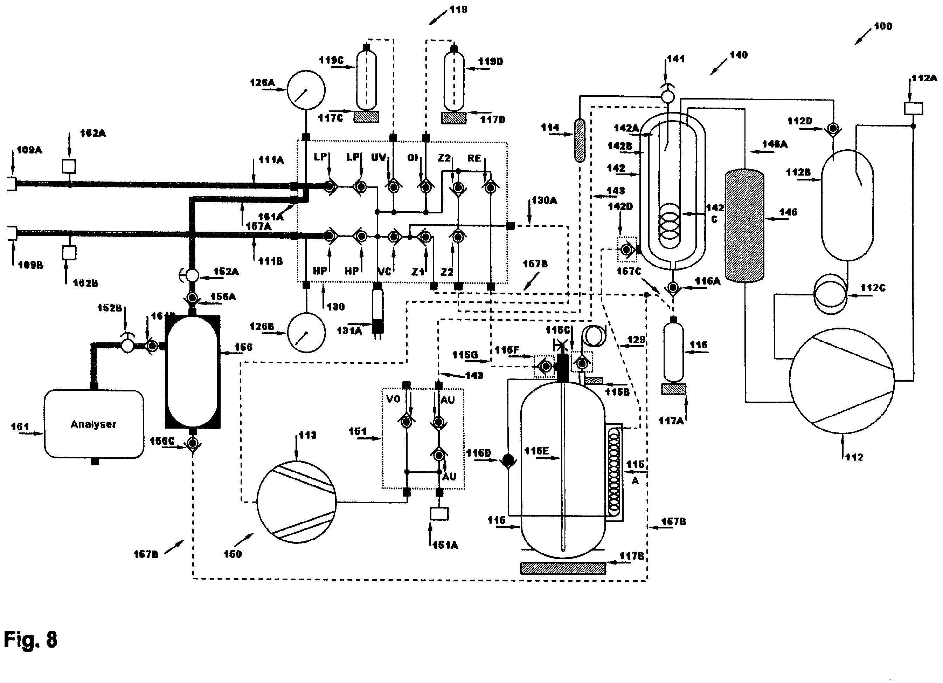

Wenn hingegen der Gasanalysator 161 die aus der Fahrzeugklimaanlage gewonnene Kältemittelprobe nicht akzeptiert, darf das Kältemittel/Kompressoröl-Gemisch aus der Fahrzeugklimaanlage in das Servicegerät 100 nicht bzw. nicht weiter einströmen. In diesem Fall, wird, wie in Figur 8 mit fett ausgezogenen Linien dargestellt, das Kältemittel/Kompressoröl-Gemisch über die Verbindungsleitung 157A und den Gasanalyseanschluss 161A zurückgeführt und über Verbinder 162A, 162B an den Druckschläuchen 111A, 111B oder deren endseitigen Anschlüssen aus der Fahrzeugklimaanlage und dem Ölseparator 156 zu einer weiteren Verwertung abgeleitet und gelangt auch nicht oder nicht weiter in den Umschalt-Ventilblock 130.

**BEZUGSZEICHENLISTE**

| | | | |
|---|---|---|---|
| 1' | Kompressor | 26B' | Hochdruckmanometer |
| 2' | Verflüssiger | 100 | Servicegerät |
| 3' | Verdampfer | 109A | Service-Anschlussverbinder |
| 4A'-C' | Rohrleitungen | 109B | Service-Anschlussverbinder |
| 5' | Abscheider | 111A | Druckschläuche |
| 6A'/B' | Serviceanschlüsse | 111B | Druckschläuche |
| 7' | Kaltluftgebläse | 112 | Verdichter |
| 8' | Warmluftgebläse | 112A | Kompressornotausventil |
| 9A'/B' | Service-Anschlussverbinder | 112B | (erster) Ölseparator |
| 10' | Fahrzeugklimaanlage | 112C | Kapillarrohr |
| 11A'/B' | Druckschläuche | 112D | Magnetventil |
| 12' | Absaugpumpe | 113 | Vakuumpumpe |
| 13' | Vakuumpumpe | 114 | Grobfilter |
| 14' | Separator | 115 | Kältemittelvorrat |
| 15' | Kältemittelvorrat | 115A | Kältemittelverflüssiger |
| 15A' | Kältemittelverflüssiger | 115B | Ventil |
| 16' | Altölbehälter | 115C | Handhabe |
| 17A'-J' | Wiegeeinrichtungen | 115D | Rückschlagventil |
| 18' | Entlastungseinrichtung | 115E | Steigrohr |
| 19' | Wiederauffüllsystem | 115F | Ventil |
| 19A' | Steuereinheit mit Ventilblock | 115G | Verbindungsleitung |
| 19B' | Steuerleitungen | 116 | Altölbehälter |
| 19C' | Vorratsbehälter | 116A | Ölablassventil |
| 19D' | Vorratsbehälter | 117A | Wiegeeinrichtung |
| 19E' | Fernanzeige | 117B | Wiegeeinrichtung |
| 19F" | Dosier- und Ventileinheit. | 117C | Wiegeeinrichtung |
| 19F'" | Dosier- und Ventileinheit | 117D | Wiegeeinrichtung |
| 19F"' | Dosier- und Ventileinheit | 119 | Wiederauffüllsystem |
| 20' | Service-Gerät | 119C | Spender |
| 26A' | Niederdruckmanometer | 119D | Spender |
| 126A | Niederdruckmanometer | 151A | Druckschalter |
| 126B | Hochdruckmanometer | 152A | Druckreduzierer |
| 129 | Verbindungsschlauch | 152B | Druckreduzierer |
| 130 | erster Umschalt-Ventilblock | 153 | Spülmitteltank |
| 130A | Sammelleitung | 154 | Filter |
| 131A | Drucksensor | 155 | Schauglas |
| 140 | Trennstufe | 156 | (zweiter) Ölseparator |
| 141 | Konstantdruckventil | 156A, C | Absperrventile |
| 142 | Doppelmantel-Wärmeaustauscher | 157A | Verbindungsleitung |
| | | 157B | Verbindungsleitung |
| 142A | Innenbehälter | 157C | Leitungsbereich |
| 142B | Außenbehälter | 158 | Absperrventil |
| 142C | Heizwendel | 159 | Koppler |
| 142D | Ventilblock | 160 | Evakuierleitung |
| 143 | Verbindungsleitung | 161 | Gasanalysator |
| 146 | Gastrockner | 161A | Gasanalyseanschluss |
| 146A | Leitung | 161B | Absperrventil |
| 150 | Vakuumeinheit | 162A/B | Verbinder |
| 151 | zweiter Umschalt-Ventilblock | | |

## Patentansprüche

1. Service-Gerät (100) für Fahrzeugklimaanlagen umfassend eine Entleereinrichtung zum Absaugen des Kältemittel-/Kompressoröl-Gemisches aus dem Kältemittel-Kreislaufsystem einer Fahrzeugklimaanlage und einen Kältemittel-Gasanalysator
**dadurch gekennzeichnet, dass**
an oder in zumindest einer der Verbindungsleitungen zwischen dem Service-Gerät (100) und der Fahrzeugklimaanlage ein Gasanalyseanschluss (161A) vorgesehen ist, der über einen evakuierbaren und mit einer Evakuiereinrichtung zumindest zeitweise verbundenen Ölseperator (156) mit dem Gasanalysator (161) für Kältemittel fluidisch verbunden ist.

2. Service-Gerät (100) nach Anspruch 1, **dadurch gekennzeichnet, dass** der Ölseperator (156) mit einer Trennstufe (140) für Kältemittel/Kompressoröl-Gemisch verbindbar ist.

3. Service-Gerät (100) nach Anspruch 1 oder 2, **dadurch gekennzeichnet, dass** der Bereich der Verbindungsleitungen zwischen dem Ölseparator (156) und Service-Anschlussverbindern (109A, 109B) des Servicegerätes (100) über Verbinder (162A, 162B) von Kältemittel/Kompressoröl-Gemisch entleerbar ist.

4. Verfahren zur vorgeschalteten Kältemittel-Gasanalyse an Servicegeräten (100) für Fahrzeugklimaanlagen,
**dadurch gekennzeichnet, dass**
eine Probe von Kältemittel/Kompressoröl-Gemisch aus der Fahrzeugklimaanlage in einen zuvor evakuierten Ölseperator (156) aus der Fahrzeugklimaanlage überführt und nach Wiederschließen der Verbindungsleitung zur Fahrzeugklimaanlage und nach einer in dem Ölseparator (156) erfolgten Trennung in eine Gasphase und eine Flüssigphase der Gasphasebereich mit einem Gasanalysator (161) zur Kältemittelanalyse verbunden wird.

5. Verfahren nach Anspruch 4, **dadurch gekennzeichnet, dass** der dem Gasanalysator (161) vorgeschaltete Ölseparator (156) mit einer Trennstufe für aus der Fahrzeugklimaanlage stammendes Kältemittel/Kompressoröl-Gemisch verbunden wird, so dass das zur Gasanalyse gezogene Probevolumen wie das übrige Kältemittel/Kompressoröl-Gemisch aus der Fahrzeugklimaanlage weiterbehandelt wird.

6. Verfahren nach Anspruch 4 oder 5, **dadurch gekennzeichnet, dass** von dem Gasanalysator (161) nicht akzeptiertes Kältemittel/Kompressoröl-Gemisch aus dem Ölseparator (156) und den Verbindungsleitungen zur Fahrzeugklimaanlage sowie aus der Fahrzeugklimaanlage gesondert ausgeleitet werden, ohne mit den übrigen in dem Servicegerät vorhandenen Leitungen und Behältern für Kältemittel und/oder Kompressoröl in Kontakt zu gelangen.

## Claims

1. A service device (100) for vehicle air conditioning systems comprising an emptying device to suck off the refrigerant/compressor oil mixture from the refrigerant circulation system of a vehicle air conditioning system and a refrigerant gas analyzer
**characterized in that**
a gas analysis port (161A) is provided on or in at least one of the connection pipes between the service device (100) and the vehicle air conditioning system that is in fluid connection with the gas analyzer (161) for refrigerant via an oil separator (156) that can be evacuated and is at least temporarily connected to an evacuation device.

2. The service device (100) according to claim 1, **characterized in that** the oil separator (156) can be connected to a separation stage (140) for the refrigerant/compressor oil mixture.

3. The service device (100) according to claim 1 or 2, **characterized in that** the area of the connection pipes between the oil separator (156) and service port connectors (109A, 109B) of the service device (100) can be emptied of refrigerant/compressor oil mixture via connectors (162A, 162B).

4. A method for upstream refrigerant gas analysis on service devices (100) for vehicle air conditioning systems,
**characterized in that**
a sample of refrigerant/compressor oil mixture from the vehicle air conditioning system is transferred to a pre-evacuated oil separator (156) from the vehicle air conditioning system and after reclosing the connection pipe to the vehicle air conditioning system and after separation into a gas phase and a liquid phase in the oil separator (156) the gas phase area is connected to a gas analyzer (161) for refrigerant analysis.

5. The method according to claim 4, **characterized in that** the oil separator (156) upstream of the gas analyzer (161) is connected to a separation stage for the refrigerant/compressor oil mixture from the vehicle air conditioning system, so that the sample volume taken for gas analysis is further treated like the remaining refrigerant/compressor oil mixture from the vehicle air conditioning system.

6. The method according to claim 4 or 5, **characterized in that** refrigerant/compressor oil mixture from the oil separator (156) and the connection pipes to the vehicle air conditioning system as well as from the vehicle air conditioning system that is not accepted by the gas analyzer (161) are separately discharged without contacting the remaining pipes and containers for refrigerant and/or compressor oil that are present in the service device.

## Revendications

1. Appareil d'entretien (100) pour systèmes de climatisation de véhicule, comprenant des moyens de vidange pour aspirer le mélange de réfrigérant/ huile de compresseur à partir du système de circulation de réfrigérant d'un système de climatisation de véhicule et un analyseur de réfrigérant en phase gazeuse
**caractérisé en ce que**
sur ou dans au moins une des conduites de raccordement entre l'appareil d'entretien (100) et le système de climatisation de véhicule, un raccord d'analyse de gaz (161A) est prévu qui est en communication fluidique avec l'analyseur de réfrigérant en phase gazeuse (161) par un séparateur d'huile (156) qu'on peut évacuer et qui est au moins temporairement raccordé à des moyens d'évacuation.

2. Appareil d'entretien (100) selon la revendication 1, **caractérisé en ce qu'**on peut raccorder le séparateur d'huile (156) à une étape de séparation (140) pour un mélange de réfrigérant/ huile de compresseur.

3. Appareil d'entretien (100) selon la revendication 1 ou 2, **caractérisé en ce que** la zone des conduites de raccordement entre le séparateur d'huile (156) et des raccords d'entretien (109A, 109B) de l'appareil d'entretien (100) peut être vidée du mélange de réfrigérant/ huile de compresseur par des raccords (162A, 162B).

4. Procédé d'analyse préalable de réfrigérant en phase gazeuse pour appareils d'entretien (100) pour systèmes de climatisation de véhicule
**caractérisé en ce que**
un échantillon du mélange de réfrigérant/ huile de compresseur du système de climatisation de véhicule est transféré à partir du système de climatisation de véhicule vers un séparateur d'huile (156) préalablement évacué, et après que la conduite de raccordement au système de climatisation de véhicule a été refermé et après que la séparation en phase gazeuse et phase liquide a été effectué dans le séparateur d'huile (156), la zone de la phase gazeuse est raccordée à l'analyseur de gaz (161) pour analyser le réfrigérant.

5. Procédé selon la revendication 4, **caractérisé en ce que** le séparateur d'huile (156) raccordé en amont de l'analyseur de gaz (161) est raccordé à une étape de séparation pour un mélange de réfrigérant/ huile de compresseur provenant du système de climatisation de véhicule, de façon que le volume d'échantillon extrait pour l'analyse de gaz est soumis au même traitement ultérieur que le mélange restant de réfrigérant/ huile de compresseur du système de climatisation de véhicule.

6. Procédé selon la revendication 4 ou 5, **caractérisé en ce qu'**un mélange de réfrigérant/ huile de compresseur qui n'a pas été accepté par l'analyseur de gaz (161) est séparément extrait du séparateur d'huile (156), des conduites de raccordement au système de climatisation de véhicule et du système de climatisation de véhicule, sans venir en contact avec les autres conduites et récipients pour réfrigérant et/ou huile de compresseur de l'appareil d'entretien.
